# FASCICULE DE BREVET EUROPEEN

(11) **EP 2 964 571 B1**
(45) Date de publication et mention de la délivrance du brevet: **10.04.2019**
(21) Numéro de dépôt: 14706916.5
(22) Date de dépôt: 11.02.2014
(51) Int. Cl.: C01B 3/50

(54) **PROCÉDÉ ET APPAREIL DE PRODUCTION DE DIOXYDE DE CARBONE ET D'HYDROGÈNE**
VERFAHREN UND VORRICHTUNG ZUR HERSTELLUNG VON KOHLENDIOXID UND WASSERSTOFF
METHOD AND APPARATUS FOR PRODUCING CARBON DIOXIDE AND HYDROGEN

(30) Priorité: 08.03.2013 FR 1352121
(43) Date de publication de la demande: 13.01.2016
(73) Titulaire: L'Air Liquide Société Anonyme pour l'Etude et l'Exploitation des Procédés Georges Claude, 75007 Paris (FR)
(72) Inventeur: CHAMBRON, Nicolas, F-94130 Nogent Sur Marne (FR); DUBETTIER-GRENIER, Richard, F-94210 La Varenne Saint Hilaire (FR); GERARD, Sylvain, F-92210 Saint-cloud (FR)
(74) Mandataire: Mercey, Fiona Susan
(86) Numéro de dépôt international: PCT/FR2014/050259
(87) Numéro de publication internationale: WO 2014/135756

(56) Documents cités:
- EP-A1- 2 149 769
- FR-A1- 2 971 044
- GB-A- 2 490 476
- US-A- 4 952 223
- US-A1- 2008 196 584

## Description

La présente invention est relative à un procédé et appareil de production de dioxyde de carbone et d'hydrogène.

Il est connu de traiter un débit d'hydrocarbures pour enlever des composants sulfureux et le dioxyde de carbone. Le débit d'hydrocarbures peut être par exemple du gaz naturel ou un gaz issu d'une raffinerie de pétrole.

Les industries de production de pétrole, de gaz naturel, ou du raffinage de pétrole, produisent des gaz acides riches en CO₂ et en composés soufrés (H₂S principalement) qui nécessitent d'être traités avant de pouvoir être libérés à l'atmosphère.

Un procédé commun pour traiter ces gaz acides est le procédé Claus dans lequel le sulfure d'hydrogène (H₂S) est converti partiellement en dioxyde de soufre (SO₂) par combustion à l'air dans un four:

2H₂S + 3O₂ → SO₂ + 2H₂O

A la sortie du four Claus, les proportions stoechiométriques d'H₂S et de SO₂ permettent la réaction de Claus, cette réaction a lieu dans plusieurs réacteurs catalytiques :

2H₂S + SO₂ ↔ 3S + 2H₂O

En résumé, le procédé Claus convertit le sulfure d'hydrogène en soufre élémentaire par combustion et réaction catalytique.

EP-A-2149769 décrit un procédé dans lequel un gaz de synthèse est épuré par une unité Selexol pour produire un débit appauvri en H₂S , ce débit étant ensuite traité pour enlever le CO2 dans un procédé correspondant à la préambule de la revendication 1. Le gaz enrichi en H₂S du Selexol est envoyé à une unité Claus pour produire du soufre.

GB-A-2490476, FR-A-2971044, US2008/196584 et US4952223 décrivent également des procédés à basse température pour produire du dioxyde de carbone et de l'hydrogène à partir d'un mélange comprenant également un composant soufré.

Une amélioration connue du procédé Claus est le remplacement de l'air par un gaz riche en oxygène (contenant entre 50 mol% et 99,8 mol% d'oxygène) ce qui permet d'obtenir des fumées plus concentrées en CO₂ (non diluées par l'azote de l'air) et de permettre la purification de ces fumées.

Les traces d'H₂S contenues dans l'effluent de l'unité Claus ('les gaz de queue') peuvent être traitées par une unité appelée TGT (Tail Gas Treatment ou « Traitement de Gas de Queue ») où l'effluent de l'unité Claus est traité par absorption avec un solvant pour réduire sa teneur en composants sulfurés, tels que CO₂ et/ou H₂S.

A la sortie de l'unité TGT, l'effluent pauvre en H₂S contient principalement du CO₂, et de l'hydrogène généré lors des étapes de purification des gaz de queue. Une composition typique peut être entre50% mol et 90% mol de CO₂ et entre 5%mol et 30% mol d'hydrogène.

Les fumées d'une unité Claus classique (avec combustion à l'air) peuvent être traitées par des unités de séparation par amines (de type MEA ou MDEA). Ces unités permettent d'obtenir un flux de CO₂ pur (>99% de CO₂ en général).

Les inconvénients des unités d'absorption par solution d'amines sont les coûts opératoires élevés, grâce au besoin intensif de vapeur pour la régénération du solvant chargé en CO₂, la dégradation progressive du solvant qui nécessite un apport constant. L'investissement est également élevé. Au-delà de l'aspect économique, les risques d'émissions et de toxicité de ces solvants requiert des procédures d'exploitation très contraignantes.

Une solution alternative est le traitement des effluents des unités Claus/TGT alimentée par de l'oxygène par une unité de séparation membranaire où un flux riche en CO₂ est produit dans le résidu (côté haute pression de la membrane) et un flux appauvri en CO₂ est produit dans le perméat (côté basse pression de la membrane), ce perméat étant recyclé au four Claus pour diluer les gaz de réactions et contrôler la température au sein du four. En effet, l'utilisation d'oxygène pur à la place de l'air nécessite d'ajouter un ballast gazeux (rôle de l'azote pour l'air) qui va absorber l'énergie de la réaction de combustion et limiter l'élévation de la température au sein du four.

Les inconvénients de cette solution sont les suivants :
- présence d'H₂ (de 25 à 35%mol) dans le perméat : le recycle du perméat vers le four de combustion génère de l'exothermicité supplémentaire par la combustion de l'hydrogène alors que le rôle du ballast est de capter une partie de l'énergie de réaction d'oxydation du sulfure d'hydrogène.
- le recycle du perméat (contenant de 65 à 75%mol de CO₂) a pour effet de grossir l'unité Claus et toutes les unités en aval.
- Le CO₂ produit a une pureté limitée à 98%.
- Le rendement de récupération est de l'ordre de 80% sans considérer le recycle du perméat ; en recyclant le perméat, la récupération de CO₂ peut atteindre jusqu'à 100% entraîne le grossissement de l'unité Claus/TGT et de toutes les unités en aval (compression, séchage, membranes).
- L'H₂ contenu dans les fumées peut difficilement être valorisé économiquement (le perméat est trop pauvre en hydrogène et de surcroit à basse pression).

La présente invention prévoit la purification des fumées de l'unité Claus, fonctionnant à l'oxygène enrichi, suivie éventuellement par une unité TGT par voie à température subambiante afin de produire un flux de CO₂ pur et un flux enrichi en hydrogène ; les méthodes de purification de ce flux enrichi en hydrogène sont également décrites.

Comme dans le cas de la solution par voie membranaire décrite précédemment, l'utilisation d'oxygène purifié en entrée de l'unité Claus et non de l'air comme les unités Claus classiques permet d'obtenir un flux très enrichi en CO₂ à la sortie de l'unité TGT et de rendre très favorable la purification de ce CO₂ par voie à température subambiante.

Les fumées en sortie de l'unité TGT, en aval d'une unité Claus alimentée par un gaz oxydant contenant au moins 95 mol % d'oxygène, ont une composition moyenne de 85% mol de CO₂, 8% mol d'hydrogène, 7% mol d'eau, 100ppmv d'H₂S et 40ppmv de COS.

Ces fumées, produites à basse pression (∼1,05 bar abs), sont comprimées jusqu'à environ 20 bar abs (de préférence entre 15 et 60 bar abs) puis séchées par un procédé d'adsorption cyclique (type TSA). Pour ne pas dégrader le rendement de récupération du CO₂, les adsorbeurs sont régénérés à la même pression que l'étape d'adsorption par une partie du flux sec sortant de l'adsorbeur en production, et le flux de régénération sortant de l'adsorbeur en régénération est refroidi pour condenser l'eau puis la phase gazeuse séparée de l'eau est réintroduite dans l'étape de compression. Dans une variante de l'invention, les adsorbeurs peuvent être régénérés par le flux d'incondensables de la séparation à température subambiante. L'étape de séchage par adsorption peut être placée à la sortie de l'étape de compression ou au sein de cette étape (en inter-étage de compresseur).

Les fumées comprimées et séchées sont refroidies à une température la plus proche possible du point triple du CO₂ (soit -56,5°C), et plus particulièrement de l'ordre de -51°C par échange à contre-courant avec une partie du CO₂ produit et détendu. Les fumées comprimées et refroidies sont condensées et séparées par la distillation à température subambiante et/ou par condensation et envoi en séparateur(s) de phase en une phase liquide riche en CO₂ (>99.5%mol) et une phase gazeuse riche en hydrogène (>60%mol). Le CO₂ produit est partiellement détendu pour générer le froid nécessaire au procédé avant d'être comprimé à la pression finale d'utilisation (par exemple. EOR, EGR...). Le flux enrichi en hydrogène est valorisé dans une autre unité que les unités Claus et TGT.

La présente invention concerne un appareil et une méthode de purification des fumées des unités Claus et éventuellement TGT pour la récupération du CO₂ et de l'hydrogène contenus.

Selon un objet de l'invention, il est prévu un procédé de production de dioxyde de carbone et d'hydrogène selon la revendication 1.

Selon d'autres caractéristiques facultatives :
- le fluide enrichi en hydrogène est un gaz et ce gaz ou un gaz dérivé de ce gaz est séparé par adsorption pour produire un débit riche en hydrogène contenant au moins 60% mol d'hydrogène et un débit appauvri en hydrogène.
- le débit riche en hydrogène contient au moins 90% mol d'hydrogène.
- le débit appauvri en hydrogène contient du dioxyde de carbone et est traité par séparation à température subambiante pour produire un débit riche en dioxyde de carbone.
- le fluide enrichi en hydrogène comprend au moins un composant soufré et est séparé par adsorption pour produire un débit appauvri en l'au moins un composant soufré.
- le fluide enrichi en hydrogène ou un gaz dérivé de ce gaz est séparé par distillation et/ou par au moins une étape de condensation partielle à une température subambiante, éventuellement alimenté par un autre débit riche en hydrogène ne provenant pas de la séparation à température subambiante.
- le fluide enrichi en hydrogène est séparé par perméation pour produire un gaz riche en hydrogène et un gaz contenant du dioxyde de carbone.
- le gaz contenant du dioxyde de carbone contient au moins 40% de dioxyde de carbone et est renvoyé à la séparation à température subambiante.
- le débit gazeux provenant de l'unité Claus n'est pas traité par une étape d'absorption avec un solvant ou par combustion avec de l'oxygène avant l'étape a).
- le débit gazeux provient directement de l'unité Claus, sans avoir été traité pour réduire sa teneur en composés soufrés, éventuellement autrement que par séchage.
- le débit gazeux à séparer dans l'unité de séparation à température subambiante contient de l'H₂S et/ou du COS.
- le débit gazeux à séparer dans l'unité de séparation contient au moins 1%, voire 2% de H₂S.
- le fluide riche en dioxyde de carbone produit par l'unité de séparation à température subambiante contient au moins 2% de H₂S et éventuellement au moins 90% de CO₂.
- le débit gazeux est traité pour réduire sa teneur en dioxyde de carbone en amont de la compression.
- le débit gazeux contient au moins un composé azoté.
- l'étape de séparation à température subambiante est intégrée thermiquement avec un procédé de traitement d'un fluide comprenant une étape à température subambiante, le procédé de traitement étant destiné à produire un fluide destiné à l'unité Claus.
- le fluide enrichi en hydrogène contient au moins 50% mol d'hydrogène, voire au moins 70% mol d'hydrogène.

Selon un autre aspect de l'invention, il est prévu un appareil selon la revendication 10.

Selon d'autres aspects facultatifs :
- le fluide enrichi en hydrogène est un gaz et l'appareil comprend une unité d'adsorption pour séparer ce gaz ou un gaz dérivé de ce gaz par adsorption pour produire un débit riche en hydrogène contenant au moins 60% mol d'hydrogène et un débit appauvri en hydrogène.
- l'appareil comprend une deuxième unité de séparation à température subambiante pour traiter le débit appauvri en hydrogène contenant du dioxyde de carbone pour produire un débit riche en dioxyde de carbone.
- le fluide enrichi en hydrogène comprend au moins un composant soufré et l'appareil comprend une unité de séparation par adsorption pour séparer ce fluide par adsorption pour produire un débit appauvri en l'au moins un composant soufré.
- l'appareil comprend une unité de séparation à température subambiante où le fluide enrichi en hydrogène ou un gaz dérivé de ce gaz est séparé par distillation et/ou par au moins une étape de condensation partielle à une température subambiante, éventuellement alimenté par un autre débit riche en hydrogène ne provenant pas de la séparation à température subambiante.
- l'appareil comprend une unité de perméation où le fluide enrichi en hydrogène est séparé par perméation pour produire un gaz riche en hydrogène et un gaz contenant du dioxyde de carbone.
- l'appareil comprend des moyens pour renvoyer le gaz contenant du dioxyde de carbone contenant au moins 40% de dioxyde de carbone à la séparation à température subambiante.
- l'appareil ne comprend pas de moyens pour traiter le débit gazeux provenant de l'unité Claus par une étape d'absorption avec un solvant ou par combustion avec de l'oxygène avant l'étape a).
- l'appareil ne comprend pas de moyens pour traiter le débit gazeux pour réduire sa teneur en composés soufrés.

L'invention sera décrite en plus de détail en se référant aux figures.

L'invention concerne l'appareil et la méthode de récupération et de purification du CO₂ et de l'hydrogène contenus dans l'effluent pauvre en H₂S d'une unité de traitement des gaz de queue (unité TGT en anglais pour Tail Gas Treatment) d'une unité Claus alimentée par de l'oxygène. Cet effluent contient typiquement moins de 1% de H₂S.

L'utilisation d'oxygène purifié en entrée de l'unité Claus et non de l'air comme les unités Claus classiques permet d'obtenir un flux très enrichi en CO₂ à la sortie de l'unité TGT et de rendre très favorable la purification de ce CO₂ par voie à température subambiante.

La présente invention prévoit la production d'un flux de CO₂ pur, par exemple contenant plus que 99% mol de dioxyde de carbone, par séparation à température subambiante de l'effluent pauvre en H₂S de l'unité TGT, la production d'un flux enrichi en hydrogène et éventuellement la valorisation du flux enrichi en hydrogène dans une autre unité que les unités Claus et TGT.

L'unité de séparation à basse pression permet la séparation d'un débit gazeux contenant de l'hydrogène et du dioxyde de carbone par distillation à température subambiante, c'est-à-dire en dessous de -20°C. Alternativement ou en addition, la séparation peut être effectuée par au moins une étape de condensation suivie d'une séparation des phases liquide et gazeuses formées.

Une première variante de cette invention prévoit la valorisation du flux enrichi en hydrogène de la séparation à température subambiante de la présente invention en l'envoyant vers l'alimentation d'une unité d'adsorption par bascule de pression (PSA) de production d'un gaz riche en hydrogène pour permettre la récupération et la purification de cet H₂.

Une deuxième variante de cette invention prévoit l'élimination par un procédé d'adsorption des traces de composés soufrés encore présents dans le flux enrichi en hydrogène produit par la séparation à température subambiante de la présente invention.

Une troisième variante de cette invention prévoit la valorisation du flux enrichi en hydrogène de la séparation à température subambiante de la présente invention en l'envoyant vers une unité de séparation par membrane où un flux d'hydrogène pur sera produit au perméat et un flux très enrichi en CO₂ sera produit au résidu. Ce flux très enrichi en CO₂ pourra, soit être valorisé directement, soit recyclé en amont de la séparation à température subambiante (et en aval de l'unité de séchage) afin d'augmenter la production de CO₂ pur de l'unité de séparation à température subambiante et/ou de baisser la pression de fonctionnement de l'unité de séparation à température subambiante tout en conservant la même récupération de CO₂.

Une quatrième variante de cette invention prévoit la valorisation du flux enrichi en hydrogène de la séparation à température subambiante de la présente invention vers une deuxième unité de séparation à température subambiante du résiduaire d'une unité d'adsorption par bascule de pression ou PSA pour la production d'un gaz riche en hydrogène afin de récupérer et purifier l'hydrogène et le CO₂ contenus dans le flux enrichi en hydrogène de la séparation à température subambiante de la présente invention.

Une cinquième variante de cette invention prévoit d'alimenter l'unité de séparation à température subambiante directement par le flux de sortie de l'unité Claus, permettant de supprimer l'unité TGT. Ce flux alimentant la séparation à température subambiante de la présente invention sera plus riche en composés soufrés Il contiendra par exemple entre 1000ppm et/ou 2,5% mol de H₂S et jusqu'à 50ppm CO₂. Ceci aura pour conséquence d'augmenter la teneur en composés soufrés du produit CO₂. Cependant, la suppression de l'unité TGT permettra de réduire les coûts de compression (équivalents aux pertes de charge de l'unité TGT), les coûts opératoires propres à l'unité TGT (essentiellement de la vapeur d'eau pour régénérer la solution d'amine) et les coûts d'investissement. L'unité de séchage du gaz d'alimentation de l'unité de séparation à température subambiante pourra être placée avant, en intermédiaire ou après l'étape de compression.

Une sixième variante de la présente invention prévoit la présence de composés azotés dans les fumées de l'unité Claus ou de l'unité Claus suivi d'un TGT alimentant la séparation à température subambiante de la présente invention. Ces composés azotés peuvent provenir de flux riches en ammoniac classiquement traités dans les unités Claus de raffinerie de pétrole.

Une septième variante de la présente invention prévoit l'intégration thermique de l'unité de séparation à température subambiante de la présente invention avec une unité de séparation à température subambiante de gaz acides (par exemple, un mélange de gaz naturel, de composés soufrés et de CO₂).

Les avantages de cette solution sont les suivants :
- Le rendement de récupération du CO₂ contenu dans les fumées est d'au moins 85% selon la teneur en CO₂ du flux d'entrée de l'unité de séparation à température subambiante.
- La pureté du CO₂ produit est >99,5% mol, ce qui est particulièrement intéressant pour les applications EOR, EGR (i.e. minimisation des incondensables ce qui minimise le coût de la compression, et minimisation des impuretés potentiellement réactives avec les matériaux de transport et d'injection du CO₂).

- Production d'un flux riche en hydrogène pouvant être valorisé directement pour sa valeur combustible ou purifié facilement dans d'autres unités (cf. variantes de l'invention).
- L'énergie spécifique de séparation (kWh/ton CO₂) est inférieure de 10 à 15% à l'énergie de la séparation membranaire (sur la base d'une récupération de 80% du CO₂ sans recycle du perméat vers le four).
- L'investissement spécifique (k€/ton CO₂) est inférieur de 5 à 10% à celui de la séparation membranaire (sur la base d'une récupération de 80% sans recycle du perméat vers le four).

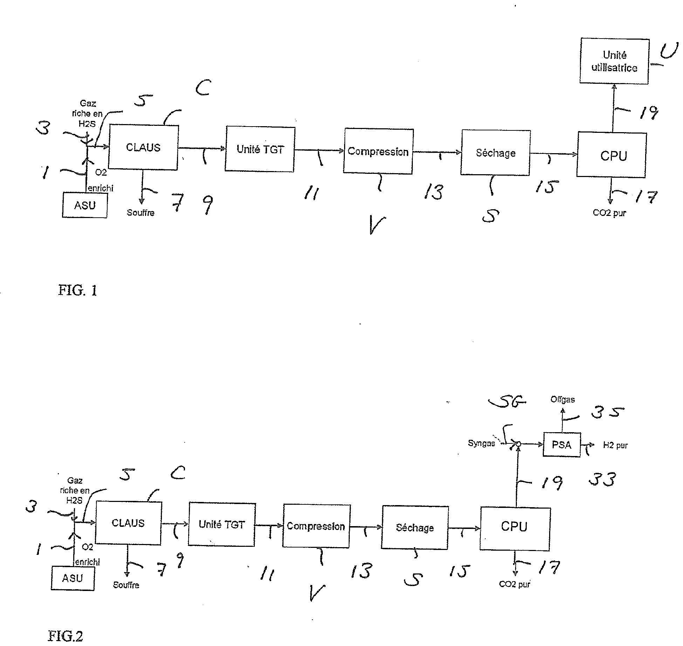

Les Figures 1 à 6 représentent des procédés et des appareils selon l'invention.

Dans la Figure 1, un appareil de séparation d'air ASU produit un gaz 1 contenant entre 50 et 99.8% mol d'oxygène qui alimente une unité Claus C. L'unité Claus C est également alimentée par un gaz 3 riche en H₂S et CO₂. Les gaz 1 et 3 peuvent être mélangés pour former un gaz 5. L'unité Claus produit du soufre 7 et un gaz résiduaire 9 contenant CO₂, CO, H₂S, H₂O, H₂, Ar principalement qui est éventuellement envoyé à une unité TGT pour produire un gaz 11 enrichi en dioxyde de carbone et un gaz enrichi en H₂S.

Soit le gaz résiduaire 9 de l'unité Claus C soit le gaz 11 dérivé de ce gaz résiduaire, suite à un traitement dans l'unité TGT, est comprimé dans un compresseur V pour former un gaz 13 à une pression d'au moins 6 bars abs, de préférence au moins 20 bars abs. Après ou pendant la compression, le gaz est séché. Ensuite le gaz séché 15 contenant au moins 50% mol de CO₂ et au moins 5% mol d'hydrogène est refroidi à une température inférieure à -50°C et envoyé à une étape de séparation à température subambiante dans l'unité CPU. Cette séparation peut comprendre au moins une étape de distillation. Elle peut également comprendre au moins une étape de condensation suivie de séparation dans un séparateur de phases. Cette séparation à température subambiante produit un gaz riche en dioxyde de carbone 17 contenant au moins 99.5% mol de CO₂ et un gaz riche en hydrogène 19 contenant au moins 50% mol d'hydrogène. Le gaz 19 est ensuite envoyé à une unité U qui utilise et/ou traite ce gaz 19.

Le procédé de la Figure 2 comprend toutes les caractéristiques de la Figure 1. Dans ce cas, l'unité U prévoit la valorisation du flux enrichi en hydrogène 19 de la séparation à température subambiante de la présente invention. Celui-ci est envoyé vers l'alimentation d'un PSA hydrogène pour permettre la purification et la récupération de cet H₂. L'unité d'adsorption de type PSA H₂ peut également être alimentée par un débit de gaz de synthèse SG contenant comme composants principaux de l'hydrogène et du dioxyde de carbone. Ceci permet de produire de l'hydrogène pur 33 et un gaz résiduaire 35. Par exemple, on pourrait mélanger un gaz de synthèse SG contenant 19% mol de CO₂, 75% d'hydrogène et 6% de méthane à 31 bars avec un gaz 19 contenant 14% CO₂, 10% d'argon, 73% d'hydrogène et 2% de CO à 52 bars. Ceci permettrait une production d'hydrogène 33 à plus que 99,6% et un gaz résiduaire 35 à 55% de CO₂, 26% d'hydrogène et 17% de méthane.

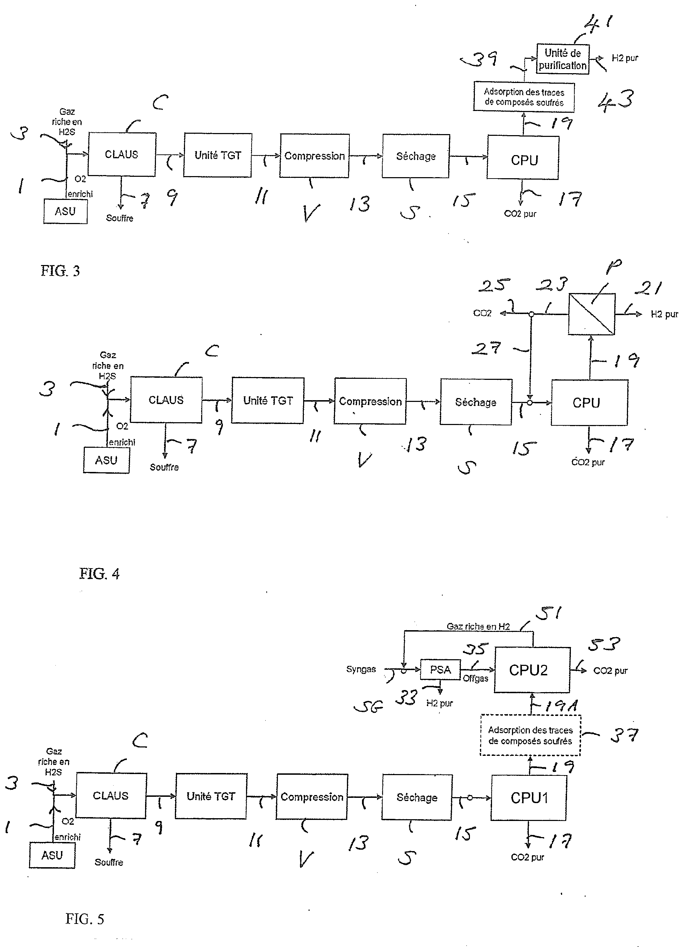

Le procédé de la Figure 3 comprend tous les éléments de la Figure 1 et en plus prévoit l'élimination par un procédé d'adsorption des traces de composés soufrés encore présents dans le flux enrichi en hydrogène de la séparation à température subambiante de la présente invention. Le gaz riche en hydrogène 19 provenant de la séparation à température subambiante est envoyé à l'unité d'adsorption 37 des traces de composés soufrés et ensuite à une unité PSA pour produire un gaz enrichi en hydrogène 33 et un gaz résiduaire 35. Par exemple le gaz 19 contenant 100ppm H₂S et 50ppm COS peut être épuré dans l'unité 37 par adsorption sur lit de garde pour réduire la teneur en ces impuretés à substantiellement zéro (en dessous du niveau ppm).

Cette figure peut être combinée avec la Figure 2 pour que le gaz riche en hydrogène soit traité par adsorption de composés soufrés en amont du PSA d'adsorption d'hydrogène.

Dans la Figure 4, on prévoit la valorisation du flux 19 enrichi en hydrogène de la séparation à température subambiante de la présente invention vers une unité de séparation par membrane P où un flux d'hydrogène pur 21 sera produit au perméat et un flux très enrichi en CO₂ 23 sera produit au résidu. Ce flux très enrichi en CO₂ pourra soit être valorisé directement comme gaz 25, soit recyclé comme gaz 27 en amont de la séparation à température subambiante (et en aval de l'unité de séchage) afin d'augmenter la production de CO₂ pur de la séparation à température subambiante dans l'unité CPU et/ou de baisser la pression de fonctionnement de l'unité de séparation à température subambiante tout en conservant la même récupération de CO₂. Par exemple, le gaz 19 peut contenir 14% de CO₂, 10% d'argon, 2% de CO et 73% d'hydrogène à 52 bars. La perméation dans l'unité P produit un perméat 21 de 91% d'hydrogène, 1% d'argon et 8% de CO₂. Le non-perméat 23 contient 42% de CO₂, 45% d'argon, 2% d'hydrogène et 9% de CO à 51 bars.

La Figure 5 prévoit la valorisation du flux enrichi en hydrogène de la séparation à température subambiante de la présente invention vers une autre unité de séparation à température subambiante CPU2. Cette deuxième unité de séparation à température subambiante est également alimentée par du gaz résiduaire 35 d'un PSA hydrogène (procédé Cryocap™ H₂) afin de récupérer et purifier l'hydrogène et le CO₂ contenus dans le flux enrichi en hydrogène 19 de la séparation à température subambiante de la présente invention. La deuxième unité de séparation à température subambiante CPU2 produit du CO₂ pur ainsi qu'un gaz 51 riche en hydrogène. Le gaz 51 est mélangé avec du gaz de synthèse SG qui alimente un PSA hydrogène. Le PSA hydrogène produit un gaz riche en hydrogène 33 et un résiduaire 35.

La récupération du CO₂ de l'unité Claus/TGT est ainsi proche de 100%. Le flux enrichi en hydrogène 19 provenant de l'unité de séparation à température subambiante de la présente invention peut être épuré en composants soufrés pour produire un gaz 19A avant d'être envoyé à l'unité de séparation à température subambiante du gaz résiduaire d'un PSA hydrogène.

En alternatif, le gaz 19 ou 19A peut être envoyé à l'entrée du PSA hydrogène qui reçoit comme autre gaz d'alimentation un gaz de synthèse SG. Dans ce cas le gaz 19 ou 19A n'alimente pas la deuxième unité CPU2 directement. Seul le gaz résiduaire 35 du PSA hydrogène alimente la deuxième unité CPU2.

La deuxième unité CPU2 peut effectuer une séparation par perméation du gaz d'alimentation et/ou d'un produit de la séparation à température subambiante.

Le gaz 19 comprend 14% CO₂, 73% d'hydrogène, 10% d'argon, 2% CO. Le gaz 33 contient 20% de dioxyde de carbone, 67% d'hydrogène, 11% de méthane, 2% de monoxyde de carbone. Le gaz résiduaire 35 contient 25% d'hydrogène, 18% de méthane, 54% dioxyde de carbone, 2% de CO et 1% d'azote.

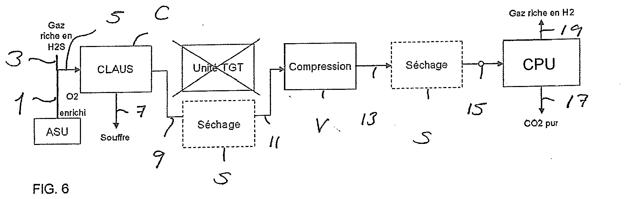

La Figure 6 prévoit d'alimenter l'unité de séparation à température subambiante CPU directement par le flux de sortie de l'unité Claus C, permettant de supprimer l'unité TGT. Ce flux alimentant la séparation à température subambiante de la présente invention sera plus riche en composés soufrés, ce qui aura pour conséquence d'augmenter la teneur en composés soufrés du produit CO₂. Cependant, la suppression de l'unité TGT permettra de réduire les coûts de compression (équivalents aux pertes de charge de l'unité TGT), les coûts opératoires propres à l'unité TGT (essentiellement vapeur pour régénérer la solution d'amine) et les coûts d'investissement. L'unité de séchage S (en pointillés) du gaz d'alimentation de l'unité de séparation à température subambiante pourra être placée avant ou après l'étape ou les étapes de compression V. Sinon elle peut avoir lieu entre deux étapes de compression. Le gaz 15 constitue donc un effluent du procédé Claus qui a été comprimé et séché mais qui n'a pas été traité par absorption par un solvant pour éliminer les composants soufrés. De même il n'a pas été traité par combustion à l'oxygène. Le gaz 15 rentrant dans l'unité de séparation à température subambiante contient donc toutes les impuretés soufrées qu'il y avait à la sortie de l'unité Claus C, par exemple 2,5% H₂S et 50ppm COS. Le gaz 15 contient 67% de dioxyde de carbone, 26% d'hydrogène, 3,5% d'argon et 1% de CO. La présence de H₂S et/ou COS n'est pas gênant dans l'unité de séparation à température subambiante. Le dioxyde de carbone produit 17 contiendra, en plus du 97% de CO₂, 3% d'H2S et 80ppm de CO₂ alors que le gaz 19 ne contiendra que 0,4% d'H₂S et quasiment pas de COS, avec 73,6% d'hydrogène. L'usage du CPU permet ainsi de séquestrer non seulement le CO₂ mais ainsi les impuretés soufrées. La présence de ces impuretés n'est pas gênante pour plusieurs applications, par exemple l'EOR.

La présence de composés azotés dans les fumées de l'unité Claus/TGT alimentant la séparation à température subambiante de la présente invention est envisageable. Ces composés azotés peuvent provenir de flux riches en ammoniac classiquement traités dans les unités Claus de raffinerie de pétrole.

L'intégration thermique de l'unité de séparation à température subambiante de la présente invention avec une autre unité de séparation à température subambiante de gaz acides (mélange, non limitatif, de gaz naturel, de composés soufrés et de CO₂) peut être envisagée. L'autre unité peut être une unité de séparation de gaz naturel de l'H₂S et du CO₂ par distillation à température subambiante. Le niveau de température est proche des températures du procédé de distillation de dioxyde de carbone, ce qui peut permettre des intégrations thermiques entre les 2 procédés et apporter des gains de consommation d'énergie de la chaîne globale de traitement du gaz naturel.

La suppression de l'unité TGT peut être envisagée également dans tous les cas décrits, y compris pour toutes les figures 1 à 5.

## Revendications

1. Procédé de production de dioxyde de carbone et d'hydrogène dans lequel
a)un débit gazeux (9) contient au moins de l'hydrogène, au moins un composant soufré et du dioxyde de carbone
b)on convertit du sulfure d'hydrogène (H₂S) partiellement en soufre dans une unité Claus (C)
c)on comprime et on sèche le débit gazeux (9, 11) pour produire un débit gazeux comprimé et séché (15) et
d)on sépare le débit gazeux comprimé et séché par distillation et/ou par au moins une étape de condensation partielle à une température subambiante pour produire au moins un fluide enrichi en dioxyde de carbone (17) par rapport au débit gazeux comprimé et séché et au moins un fluide (19) enrichi en hydrogène par rapport au débit gazeux comprimé et séché **caractérisé en ce que** l'unité Claus (C) est alimentée par un gaz (1) contenant au moins 50% mol oxygène et produit le débit gazeux.

2. Procédé selon la revendication 1 dans lequel le fluide enrichi en hydrogène (17) est un gaz et ce gaz ou un gaz dérivé de ce gaz est séparé par adsorption pour produire un débit riche en hydrogène (33, 43) contenant au moins 60% mol d'hydrogène et un débit (35) appauvri en hydrogène.

3. Procédé selon la revendication 2 dans lequel le débit appauvri en hydrogène contient du dioxyde de carbone et est traité par séparation à température subambiante (CPU2) pour produire un débit riche en dioxyde de carbone.

4. Procédé selon la revendication 1, 2 ou 3 dans lequel le fluide enrichi en hydrogène (19) comprend au moins un composant soufré et est séparé par adsorption pour produire un débit appauvri (19A) en l'au moins un composant soufré.

5. Procédé selon l'une des revendications 1 à 4 dans lequel le fluide enrichi en hydrogène (19) ou un gaz (19A, 35) dérivé de ce gaz est séparé par distillation et/ou par au moins une étape de condensation partielle à une température subambiante, éventuellement alimentée par un autre débit (SG) riche en hydrogène ne provenant pas de la séparation à température subambiante.

6. Procédé selon l'une des revendications 1 à 5 dans lequel le fluide enrichi en hydrogène (19) est séparé par perméation pour produire un gaz riche en hydrogène (21) et un gaz (23) contenant du dioxyde de carbone, et éventuellement le gaz contenant du dioxyde de carbone (27) contient au moins 40% de dioxyde de carbone et est renvoyé à la séparation à température subambiante.

7. Procédé selon l'une des revendications précédentes dans lequel le débit gazeux (9) provenant de l'unité Claus (C) n'est pas traité par une étape d'absorption avec un solvant ou par combustion avec de l'oxygène avant l'étape a).

8. Procédé selon la revendication 7 dans lequel le débit gazeux provient directement de l'unité Claus (C), sans avoir été traité pour réduire sa teneur en composés soufrés.

9. Procédé selon l'une des revendications 1 à 8 dans lequel l'étape de séparation à température subambiante (CPU) est intégrée thermiquement avec un procédé de traitement d'un fluide comprenant une étape à température subambiante, le procédé de traitement étant destiné à produire un fluide destiné à l'unité Claus (C).

10. Appareil de production de dioxyde de carbone et d'hydrogène comprenant , un compresseur (V), des moyens pour envoyer un débit gazeux (11, 13) contenant au moins de l'hydrogène, au moins un composant soufré et du dioxyde de carbone au compresseur pour comprimer le débit gazeux, une unité de séchage (S) pour sécher le débit gazeux pour produire un débit gazeux comprimé et séché (15) et une unité de séparation à température subambiante (CPU) pour séparer le débit gazeux comprimé et séché par distillation et/ou par au moins une étape de condensation partielle à une température subambiante pour produire au moins un fluide enrichi en dioxyde de carbone par rapport au débit gazeux comprimé et séché et au moins un fluide enrichi en hydrogène par rapport au débit gazeux comprimé et séché **caractérisé en ce qu'**il comprend une unité Claus (C) reliée au compresseur par les moyens pour envoyer le débit gazeux, ainsi que des moyens pour alimenter l'unité Claus par un gaz (1) contenant au moins 50% mol oxygène.

11. Appareil selon la revendication 10 dans lequel le fluide enrichi en hydrogène est un gaz et l'appareil comprend une unité d'adsorption pour séparer ce gaz ou un gaz dérivé de ce gaz par adsorption pour produire un débit riche en hydrogène contenant au moins 60% mol d'hydrogène et un débit appauvri en hydrogène.

12. Appareil selon la revendication 11 comprenant une deuxième unité de séparation à température subambiante pour traiter le débit appauvri en hydrogène contenant du dioxyde de carbone pour produire un débit riche en dioxyde de carbone.

13. Appareil selon l'une des revendications 10 à 12 dans lequel le fluide enrichi en hydrogène comprend au moins un composant soufré et l'appareil comprend une unité de séparation par adsorption pour séparer ce fluide par adsorption pour produire un débit appauvri en l'au moins un composant soufré.

14. Appareil selon l'une des revendications 10 à 13 comprenant une unité de séparation à température subambiante où le fluide enrichi en hydrogène ou un gaz dérivé de ce gaz est séparé par distillation et/ou par au moins une étape de condensation partielle à une température subambiante, éventuellement alimenté par un autre débit riche en hydrogène ne provenant pas de la séparation à température subambiante.

15. Appareil selon l'une des revendications 10 à 14 comprenant des moyens pour renvoyer le gaz contenant du dioxyde de carbone contenant au moins 40% de dioxyde de carbone à la séparation à température subambiante.

## Patentansprüche

1. Verfahren zur Herstellung von Kohlendioxid und Wasserstoff, wobei
a) ein Gasdurchsatz (9) mindestens Wasserstoff, mindestens eine Schwefelkomponente und Kohlendioxid enthält
b) Schwefelwasserstoff (H₂S) in einer Claus-Anlage (C) teilweise in Schwefel umgewandelt wird
c) der Gasdurchsatz (9, 11) komprimiert und getrocknet wird, um einen komprimierten und getrockneten Gasdurchsatz (15) herzustellen, und
d) der komprimierte und getrocknete Gasdurchsatz durch Destillieren und/oder durch mindestens einen Teilkondensationsschritt auf einer Temperatur unter Umgebungstemperatur abgeschieden wird, um mindestens ein mit Kohlendioxid angereichertes (17) Fluid im Verhältnis zum komprimierten und getrockneten Gasdurchsatz und mindestens ein mit Wasserstoff angereichertes Fluid (19) im Verhältnis zum komprimierten und getrockneten Gasdurchsatz herzustellen, **dadurch gekennzeichnet, dass** die Claus-Anlage (C) mit einem Gas (1) versorgt wird, das mindestens 50 Mol-% Sauerstoff enthält und den Gasdurchsatz herstellt.

2. Verfahren nach Anspruch 1, wobei das mit Wasserstoff (17) angereicherte Fluid ein Gas ist und dieses Gas oder ein von diesem Gas abgeleitetes Gas durch Adsorption abgeschieden wird, um einen wasserstoffreichen Durchsatz (33, 43) herzustellen, der mindestens 60 Mol-% Wasserstoff und einen an Wasserstoff verarmten Durchsatz (35) enthält.

3. Verfahren nach Anspruch 2, wobei der an Wasserstoff verarmte Durchsatz Kohlendioxid enthält und durch Abscheiden auf einer Temperatur unter Umgebungstemperatur (CPU2) behandelt wird, um einen kohlendioxidreichen Durchsatz herzustellen.

4. Verfahren nach Anspruch 1, 2 oder 3, wobei das mit Wasserstoff angereicherte Fluid (19) mindestens eine Schwefelkomponente umfasst und durch Adsorption abgeschieden wird, um einen an der mindestens einen Schwefelkomponente verarmten Durchsatz (19A) herzustellen.

5. Verfahren nach einem der Ansprüche 1 bis 4, wobei das mit Wasserstoff (19) angereicherte Fluid oder ein von diesem Gas abgeleitetes Gas (19A, 35) durch Destillieren und/oder durch mindestens einen Teilkondensationsschritt auf einer Temperatur unter Umgebungstemperatur abgeschieden wird, eventuell durch einen anderen wasserstoffreichen Durchsatz (SG) versorgt, der nicht aus der Abscheidung auf einer Temperatur unter Umgebungstemperatur stammt.

6. Verfahren nach einem der Ansprüche 1 bis 5, wobei das mit Wasserstoff (19) angereicherte Fluid durch Permeation abgeschieden wird, um ein wasserstoffreiches Gas (21) und ein Gas (23) herzustellen, das Kohlendioxid enthält, und eventuell das Gas, das Kohlendioxid (27) enthält, mindestens 40% Kohlendioxid enthält und auf einer Temperatur unter Umgebungstemperatur zur Abscheidung zurückgeschickt wird.

7. Verfahren nach einem der vorstehenden Ansprüche, wobei der Gasdurchsatz (9), der aus der Claus-Anlage (C) stammt, nicht durch einen Adsorptionsschritt mit einem Lösemittel oder durch Verbrennung mit dem Sauerstoff vor dem Schritt a) behandelt wird.

8. Verfahren nach Anspruch 7, wobei der Gasdurchsatz direkt aus der Claus-Anlage (C) stammt, ohne behandelt worden zu sein, um seinen Schwefelkomponentengehalt zu verringern.

9. Verfahren nach einem der Ansprüche 1 bis 8, wobei der Abscheideschritt auf einer Temperatur unter Umgebungstemperatur (CPU) thermisch mit einem Behandlungsverfahren eines Fluids integriert wird, das einen Schritt auf einer Temperatur unter Umgebungstemperatur umfasst, wobei das Behandlungsverfahren dazu bestimmt ist, ein Fluid herzustellen, das für die Claus-Anlage (C) bestimmt ist.

10. Vorrichtung zur Herstellung von Kohlendioxid und Wasserstoff, umfassend einen Kompressor (V), Mittel zum Schicken eines Gasdurchsatzes (11, 13), der mindestens Wasserstoff, mindestens eine Schwefelkomponente und Kohlendioxid enthält, zum Kompressor, um den Gasdurchsatz zu komprimieren, eine Trockeneinheit (S) zum Trocknen des Gasdurchsatzes, um einen komprimierten und getrockneten Gasdurchsatz (15) herzustellen, und eine Abscheideeinheit auf einer Temperatur unter Umgebungstemperatur (CPU) zum Abscheiden des komprimierten und getrockneten Gasdurchsatzes durch Destillieren und/oder durch mindestens einen Teilkondensationsschritt auf einer Temperatur unter Umgebungstemperatur, um mindestens ein mit Kohlendioxid angereichertes Fluid im Verhältnis zum komprimierten und getrockneten Gasdurchsatz, und mindestens ein mit Wasserstoff angereichertes Fluid im Verhältnis zum komprimierten und getrockneten Gasdurchsatz herzustellen, **dadurch gekennzeichnet, dass** sie eine Claus-Anlage (C) umfasst, die durch die Mittel , um den Gasdurchsatz zu schicken, an den Kompressor angeschlossen ist, sowie Mittel, um die Claus-Anlage mit einem Gas (1) zu versorgen, das mindestens 50 Mol-% Sauerstoff enthält.

11. Vorrichtung nach Anspruch 10, wobei das mit Wasserstoff angereicherte Fluid ein Gas ist und die Vorrichtung eine Adsorptionseinheit umfasst, um dieses Gas oder ein von diesem Gas abgeleitetes Gas durch Adsorption abzuscheiden, um einen wasserstoffreichen Durchsatz herzustellen, der mindestens 60 Mol-% Wasserstoff und einen an Wasserstoff verarmten Durchsatz enthält.

12. Vorrichtung nach Anspruch 11, umfassend eine zweite Abscheideeinheit auf einer Temperatur unter Umgebungstemperatur zum Behandeln des an Wasserstoff verarmten Durchsatzes, der Kohlendioxid enthält, um einen kohlendioxidreichen Durchsatz herzustellen.

13. Vorrichtung nach einem der Ansprüche 10 bis 12, wobei das mit Wasserstoff angereicherte Fluid mindestens eine Schwefelkomponente umfasst und die Vorrichtung eine Abscheideeinheit durch Adsorption umfasst, um dieses Fluid durch Adsorption abzuscheiden, um einen an der mindestens einen Schwefelkomponente verarmten Durchsatz herzustellen.

14. Vorrichtung nach einem der Ansprüche 10 bis 13, umfassend eine Abscheideeinheit auf einer Temperatur unter Umgebungstemperatur, wo das mit Wasserstoff angereicherte Fluid oder ein von diesem Gas abgeleitetes Gas durch Destillieren und/oder durch mindestens einen Teilkondensationsschritt auf einer Temperatur unter Umgebungstemperatur abgeschieden wird, eventuell durch einen anderen wasserstoffreichen Durchsatz versorgt, der nicht aus der Abscheidung auf einer Temperatur unter Umgebungstemperatur stammt.

15. Vorrichtung nach einem der Ansprüche 10 bis 14, umfassend Mittel zum Zurückschicken des Gases, das Kohlendioxid enthält, das bei der Abscheidung auf einer Temperatur unter Umgebungstemperatur mindestens 40 % Kohlendioxid enthält.

## Claims

1. Method for producing carbon dioxide and hydrogen wherein
a) a gas flow (9) contains at least hydrogen, at least one sulphur component and carbon dioxide
b) hydrogen sulphide (H₂S) is partially converted into sulphur in a Claus unit (C)
c) the gas flow (9, 11) is compressed and dried in order to produce a compressed and dried gas flow (15) and
d) the compressed and dried gas flow is separated by distillation and/or by at least one step of partial condensation at a sub-ambient temperature in order to produce at least one fluid enriched with carbon dioxide (17) relative to the compressed and dried gas flow and at least one fluid enriched with hydrogen (19) relative to the compressed and dried gas flow **characterised in that** the Claus unit (C) is supplied with a gas (1) containing at least 50 mol % oxygen and produces the gas flow.

2. Method according to claim 1 wherein the fluid enriched with hydrogen (17) is a gas and this gas or a gas derived from this gas is separated by adsorption in order to produce a hydrogen-rich flow (33, 43) containing at least 60 mol % hydrogen and a hydrogen-depleted flow (35).

3. Method according to claim 2 wherein the hydrogen-depleted flow contains carbon dioxide and is treated by separation at sub-ambient temperature (CPU2) in order to produce a flow rich in carbon dioxide.

4. Method according to claim 1, 2 or 3 wherein the fluid enriched with hydrogen (19) comprises at least one sulphur component and is separated by adsorption in order to produce a flow depleted (19A) in the at least one sulphur component.

5. Method according to any of claims 1 to 4 wherein the fluid enriched with hydrogen (19) or a gas (19A, 35) derived from this gas is separated by distillation and/or by at least one step of partial condensation at a sub-ambient temperature, optionally supplied with another hydrogen-rich flow (SG) not coming from the separation at sub-ambient temperature.

6. Method according to any of claims 1 to 5 wherein the fluid enriched with hydrogen (19) is separated by permeation in order to produce a hydrogen-rich gas (21) and a gas (23) containing carbon dioxide, and optionally the gas containing carbon dioxide (27) contains at least 40% carbon dioxide and is sent to the separation at sub-ambient temperature.

7. Method according to any of the preceding claims wherein the gas flow (9) coming from the Claus unit (C) is not treated by a step of absorption with a solvent or by combustion with oxygen before the step a).

8. Method according to claim 7 wherein the gas flow directly comes from the Claus unit (C), without having been treated to reduce its content in sulphur compounds.

9. Method according to any of claims 1 to 8 wherein the step of separation at sub-ambient temperature (CPU) is thermally integrated with a method for treating a fluid comprising a step at sub-ambient temperature, with the treatment method being intended to produce a fluid intended for the Claus unit (C).

10. Apparatus for producing carbon dioxide and hydrogen comprising a compressor (V), means for sending a gas flow (11, 13) containing at least hydrogen, at least one sulphur component and carbon dioxide to the compressor in order to compress the gas flow, a drying unit (S) in order to dry the gas flow in order to produce a compressed and dried gas flow (15) and a separation unit at sub-ambient temperature (CPU) in order to separate the compressed and dried gas flow by distillation and/or by at least one step of partial condensation at a sub-ambient temperature in order to produce at least one fluid enriched with carbon dioxide relative to the compressed and dried gas flow and at least one fluid enriched with hydrogen relative to the compressed and dried gas flow **characterised in that** it comprises a Claus unit (C) connected to the compressor by the means for sending the gas flow, as well as means for supplying the Claus unit with a gas (1) containing at least 50 mol % oxygen.

11. Apparatus according to claim 10 wherein the fluid enriched with hydrogen is a gas and the apparatus comprises an adsorption unit for separating this gas or a gas derived from this gas by adsorption in order to produce a hydrogen-rich flow containing at least 60 mol % hydrogen and a hydrogen-depleted flow.

12. Apparatus according to claim 11 comprising a second separation unit at sub-ambient temperature in order to treat the hydrogen-depleted flow containing carbon dioxide in order to produce a flow rich in carbon dioxide.

13. Apparatus according to any of claims 10 to 12 wherein the fluid enriched with hydrogen comprises at least one sulphur component and the apparatus comprises a separation unit by adsorption in order to separate this fluid by adsorption in order to produce a flow depleted in the at least one sulphur component.

14. Apparatus according to any of claims 10 to 13 comprising a separation unit at sub-ambient temperature wherein the fluid enriched with hydrogen or a gas derived from this gas is separated by distillation and/or by at least one step of partial condensation at a sub-ambient temperature, optionally supplied by another flow rich in hydrogen not coming from the separation at sub-ambient temperature.

15. Apparatus according to any of claims 10 to 14 comprising means for sending the gas containing carbon dioxide containing at least 40% carbon dioxide to the separation at sub-ambient temperature.
